# EUROPÄISCHE PATENTSCHRIFT

(11) **EP 1 343 215 B1**
(45) Veröffentlichungstag und Bekanntmachung des Hinweises auf die Patenterteilung: **10.01.2007**
(21) Anmeldenummer: 03405060.9
(22) Anmeldetag: 05.02.2003
(51) Int. Cl.: H01M 8/12, H01M 4/86

(54) **Strukturierter Körper für eine in Brennstoffzellen verwendete Anode**
Structured body used as anode in fuel cell
Corps structuré utilisé comme anode pour une cellule à combustible

(30) Priorität: 04.03.2002 EP 02405163
(43) Veröffentlichungstag der Anmeldung: 10.09.2003
(73) Patentinhaber: Sulzer Hexis AG, 8400 Winterthur (CH)
(72) Erfinder: Robert, Gilles, Dr., 8008 Zürich (CH); Kaiser, Andreas Franz-Josef, Dr., 8353 Elgg (CH); Batawi, Emad, Dr., 8400 Winterthur (CH)
(74) Vertreter: Sulzer Management AG

(56) Entgegenhaltungen:
- WO-A-02/03491
- DE-A- 19 819 453
- US-A- 6 017 647

## Beschreibung

Die Erfindung betrifft einen strukturierten Körper für eine in Brennstoffzellen verwendete Anode, der nachfolgend kurz mit Anodenstruktur bezeichnet wird. Die Erfindung bezieht sich auch eine Hochtemperatur-Brennstoffzelle mit einer derartigen Anodenstruktur sowie auf ein Verfahren zur Herstellung der erfindungsgemässen Anodenstruktur.

Die US-A- 6 017 647 offenbart für eine Hochtemperatur-Brennstoffzelle (SOFC- Brennstoffzelle) eine Elektroden/Elektrolyt-Struktur, die aus porösen Verbundelektroden auf einer dichten Membran aus Feststoffelektroyt (kurz auch Festelektrolyt) besteht. Eine verwandte Struktur ist aus der DE-A- 19 819 453 bekannt, bei der ein Anodensubstrat eine Trägerstruktur bildet. Auf dieser Trägerstruktur sind eine Anodenzwischenschicht, ein Feststoffelektroyt, vorzugsweise in Form einer sehr dünnen Schicht, und eine schichtförmige Katode aufgebracht. Das Anodensubstrat und die Anodenzwischenschicht werden aus dem gleichen Elektrodenmaterial hergestellt, nämlich aus einem porösen Cermet, der aus dem keramischem Material YSZ (Yttrium stabilisiertes Zirkoniumoxid), das auch als Feststoffelektroyt verwendet wird, und Nickel besteht. Im Kontaktbereich zwischen Anode und Elektrolyt finden an sogenannten Drei-Phasenpunkten (Nickel / Elektrolyt / Pore) elektrochemische Reaktionen statt, bei denen Nickelatome durch Sauerstoffionen (O²⁻) des Elektrolyten oxidiert und diese durch einen gasförmigen Brennstoff (H₂, CO) wieder reduziert werden, wobei H₂O und CO₂ gebildet und die bei der Oxidation freigesetzten Elektronen vom Anodensubstrat weiter geleitet werden. Um für die Drei-Phasenpunkte eine grosse Dichte dieser Punkte zu erhalten, wird eine Zusammensetzung der Anodenzwischenschicht vorgeschlagen, für die das Verhältnis der Volumenanteile von Nickel, YSZ und Poren nahe bei 1 : 1 : 1 liegt.

Das Ziel einer möglichst grossen Dichte der Drei-Phasenpunkte ist jedoch hinsichtlich einer anderen Problematik von geringerer Bedeutung, nämlich hinsichtlich dem Erfordernis, dass die Anode eine sogenannte Redox-Stabilität aufweisen soll. Die Redox-Stabilität betrifft die Eigenschaften des Elektrodenmaterials bezüglich einem vielfachen Wechsel zwischen oxidierenden und reduzierenden Bedingungen. Einerseits soll dieser Wechsel, der nachfolgend kurz als Redox-Wechsel bezeichnet wird, für die keramischen Komponenten keine wesentlichen Eigenschaftsänderungen zur Folge haben. Andererseits soll mittels den beständigen keramischen Komponenten eine irreversible Änderung, d.h. eine Alterung der metallischen Komponenten infolge der Redox-Wechsel, so beeinflusst werden, dass die elektrische Leitfähigkeit des Elektrodenmaterials weitgehend aufrecht erhalten bleibt. Bei einer solchen Alterung findet ein Komwachstum des Nickels statt, bei dem grosse Kristallite auf Kosten von kleinen wachsen und so Lücken in elektrisch leitenden Verbindungen der Anodenstruktur entstehen lassen.

Die Redox-Stabilität ist in der Praxis sehr wichtig. Denn erfahrungsgemäss ist es nicht möglich, eine Batterie mit Brennstoffzellen kontinuierlich in Betrieb zu halten. Bei jedem Betriebsabbruch muss aus Sicherheitsgründen die Zufuhr des Brennstoffs gestoppt werden. Bei einem Ausbleiben des gasförmigen Brennstoffs dringt Sauerstoff auf die Anodenseiten der Brennstoffzellen ein, und es geht der zuvor reduzierte Zustand des Nickels in den oxidierten Zustand über. Bei der Verwendung von Brennstoffzellen in der Haustechnik zwecks simultaner Erzeugung von elektrischer und thermischer Energie ist pro Jahr mit rund zwanzig Betriebsunterbrüchen zu rechnen. Aus wirtschaftlichen Gründen muss eine Brennstoffzelle während rund fünf Jahren verwendbar sein. Somit darf die Brennstoffzelle nur so schnell altern, dass bis zu 100 Redox-Wechsel möglich sind.

Ausser der Redox-Stabilität ist aber auch eine gute Gasdurchlässigkeit der Anodenstruktur wichtig; ausserdem - hinsichtlich einer kommerziellen Nutzung - eine Herstellung der Anodenstruktur, die wirtschaftlich sein soll.

Aufgabe der Erfindung ist es, eine Anodenstruktur zu schaffen, die in Bezug auf Redox-Stabilität, Gasdurchlässigkeit und Wirtschaftlichkeit für eine Verwendung in Brennstoffzellen ausreichend gut ausgebildet ist. Diese Aufgabe wird durch den im Anspruch 1 definierten, als Anodenstruktur bezeichneten Körper gelöst.

Der strukturierte Körper, der zur Verwendung für eine Anode in Brennstoffzellen vorgesehen ist, weist eine durch Makroporen und ein Elektrodenmaterial gebildete Struktur auf. Die Makroporen bilden kommunizierende Räume, die mittels Porenbildner erzeugt sind. Das Elektrodenmaterial umfasst skelett- oder netzartige, zusammenhängende Gefüge aus durch Sintern verbundenen Partikeln, die zwei ineinander verschränkte Retikularsysteme bilden: ein erstes Retikularsystem aus keramischem Material und ein zweites Retikularsystem, das Metalle zur Bewirkung einer elektrischen Leitfähigkeit enthält. Das Elektrodenmaterial hat die Eigenschaften, dass bei mehrfachem Wechsel zwischen oxidierenden und reduzierenden Bedingungen einerseits im keramischen Retikularsystem keine wesentlichen Eigenschaftsänderungen auftreten und andererseits im zweiten Retikularsystem sich eine Oxidation bzw. Reduktion der Metalle ergibt. Ausserdem bilden die beiden Retikularsysteme zusammen ein dichtes Gefüge, das im oxidierten Zustand Mikroporen enthält, deren Volumenanteil bezogen auf das Elektrodenmaterial kleiner als 20%, vorzugsweise kleiner als 5% ist.

Es ist hierbei der Begriff Retikularsystem eingeführt worden. Darunter soll ein skelett- oder netzartiges, zusammenhängendes Gefüge von Partikeln verstanden werden. Durch den Zusammenhang des Retikularsystems wird diesem eine strukturelle Stabilität und/oder eine elektrische Leitfähigkeit verliehen. Damit eine strukturelle Stabilität vorliegt, dürfen im Retikularsystem keine chemischen Änderungen auftreten. Dies ist für das keramische Retikularsystem der Fall. Das zweite Retikularsystem besitzt eine Struktur, die sich wegen den Redox-Wechsel wandelt, so dass nur eine geringe strukturelle Stabilität vorliegt. Die Funktion des zweiten Retikularsystems als elektrisch leitende Verbindung bleibt dank der strukturellen Stabilität des ersten Retikularsystems bestehen. Die beiden Retikularsysteme ergeben sich auf natürliche Weise in Form einer statistischen Verteilung aus den konstituierenden Partikeln, wenn diese Partikel so präpariert werden, dass sie für die beiden Partikelsorten jeweils ein schmales Grössenspektrum aufweisen, wenn der Volumenanteil für jedes Retikularsystem mindestens rund 30% beträgt und wenn die Partikel homogen miteinander vermischt werden. (Es dürfen allerdings dem keramischen Retikularsysteme auch relativ grosse Partikel beigemischt sein, die inselartig in eine Matrix von feinen Partikeln eingelagert sind.) Das durch die Poren gebildete System von kommunizierenden Räumen ist ebenfalls ein Retikularsystem. Dieses Retikularsystem ergibt die benötigte Gasdurchlässigkeit der Anodenstruktur.

Die erfindungsgemässe Anodenstruktur hat in einer bevorzugten Ausführungsform sowohl die Funktion einer Trägerstruktur als auch die Funktion der oben genannten Anodenzwischenschicht. Sie kann aber auch lediglich den tragenden Teil der Anode bilden, der als Trägerstruktur für eine Anodenzwischenschicht dient. Als Trägerstruktur muss der erfindungsgemässe Körper so stark ausgebildet sein, dass er einer mechanischen Belastung von beispielsweise 20 kPa widersteht; eine Belastung in dieser Grössenordnung liegt nämlich bei einem Einbau in einer stapelartigen Anordnung von Brennstoffzellen vor.

Die abhängigen Ansprüche 2 bis 8 betreffen vorteilhafte Ausführungsformen der erfindungsgemässen Anodenstruktur. Gegenstand der Ansprüche 9 und 10 sind eine Hochtemperatur-Brennstoffzelle mit der erfindungsgemässen Anodenstruktur bzw. ein Verfahren zur Herstellung dieser Anodenstruktur.

Nachfolgend wird die Erfindung anhand der Zeichnungen erläutert. Es zeigen:
- Fig. 1: eine schematische Darstellung einer Brennstoffzelle,
- Fig. 2: einen Querschnitt durch ein poröses Material, das als eine erfindungsgemässe Anodenstruktur verwendbar ist,
- Fig. 3, 4: Ausschnitte von zwei Retikularsystemen, nämlich skelett- oder netzartigen, zusammenhängenden Gefügen von Partikeln,
- Fig. 5: die beiden Retikularsysteme der Figuren 3 und 4, die ineinander verschränkt sind, und
- Fig. 6: eine Anodenstruktur, in deren Elektrodenmaterial grössere Partikel aus keramischem Material eingelagert sind.

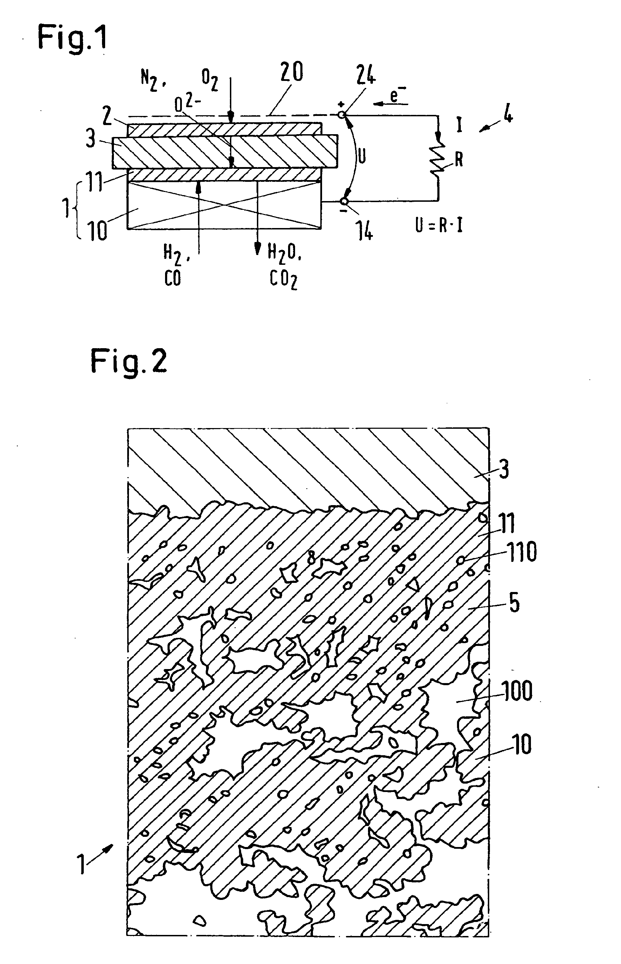

In einer Hochtemperatur-Brennstoffzelle, wie sie in Fig. 1 schematisch dargestellt ist, werden Elektrodenreaktionen zur Erzeugung eines elektrischen Stroms I durchgeführt: nämlich reduzierende Reaktionen auf oder in einer Anode 1, bei denen aus Wasserstoff und Kohlenmonoxid, die den gasförmigen Brennstoff bilden, Wasser bzw. Kohlendioxid entstehen; und oxidierende Reaktionen auf einer Katode 2, bei der aus molekularem Sauerstoff eines zweiten Gasstroms (z. B. Luft: O₂ und N₂) ionischer Sauerstoff O²⁻ - unter Aufnahme von Elektronen e⁻ aus einem metallischen Leiter 20 und einem Pol 24 - gebildet wird. Die Sauerstoffionen bewegen sich durch einen Feststoffelektrolyten 3, der die beiden Elektroden 1, 2 gasdicht trennt und der bei Temperaturen über 700 °C für die Sauerstoffionen leitend ist. Es erfolgt die reduzierende Anodenreaktion mit den Sauerstoffionen unter Abgabe von Elektronen an einen weiteren metallischen Leiter, der eine Verbindung zu einem Pol 14 herstellt. Zwischen den Polen 14 und 24 ist ein Verbraucher 4 angeordnet, der die Brennstoffzelle mit einem Widerstand R belastet. Die Spannung U zwischen den Polen 14, 24 wird in der praktischen Anwendung der Brennstoffzelle durch einen Stapel von in Serie geschalteten Zellen erzeugt.

Die Anodenstruktur 1 hat in einer bevorzugten Ausführungsform einen heterogenen Aufbau aus einer homogen strukturierten, porösen Trägerstruktur 10 und einer dichteren Randzone 11. Die Poren der Trägerstruktur 10 sind Makroporen 100 sowie Mikroporen 110: siehe Fig. 2. Die Randzone 11 enthält im gezeigten Beispiel nur Mikroporen 110. Die benachbarten Schichten, nämlich die vorzugsweise dünne Festelektroytschicht 3 und die Katode 2, sind beispielsweise mittels einem thermischen Spritzverfahren herstellbar; sie lassen sich auch unter Anwendung eines Siebdruckverfahrens herstellen. Das Material für die Elektroden 1 und 2 muss bei einer Betriebstemperatur von bis zu 1000°C verwendbar sein. Die Makroporen 100 der Anodenstruktur 1 bilden kommunizierende Räume, die eine bezüglich den Elektrodenreaktionen ausreichende Durchlässigkeit für den gasförmigen Brennstoff ergeben. Diese Durchlässigkeit besteht bis zur Randzone 11, die eine Grenzzone unter der Elektrolytschicht 3 bildet. In dieser Grenzzone 11 ist eine weitere Gasdurchlässigkeit durch die Mikroporen 110 gegeben. Im reduzierten Zustand der Anodenstruktur 1 ist die durch Mikroporen 110 gegebene Porosität grösser als dargestellt.

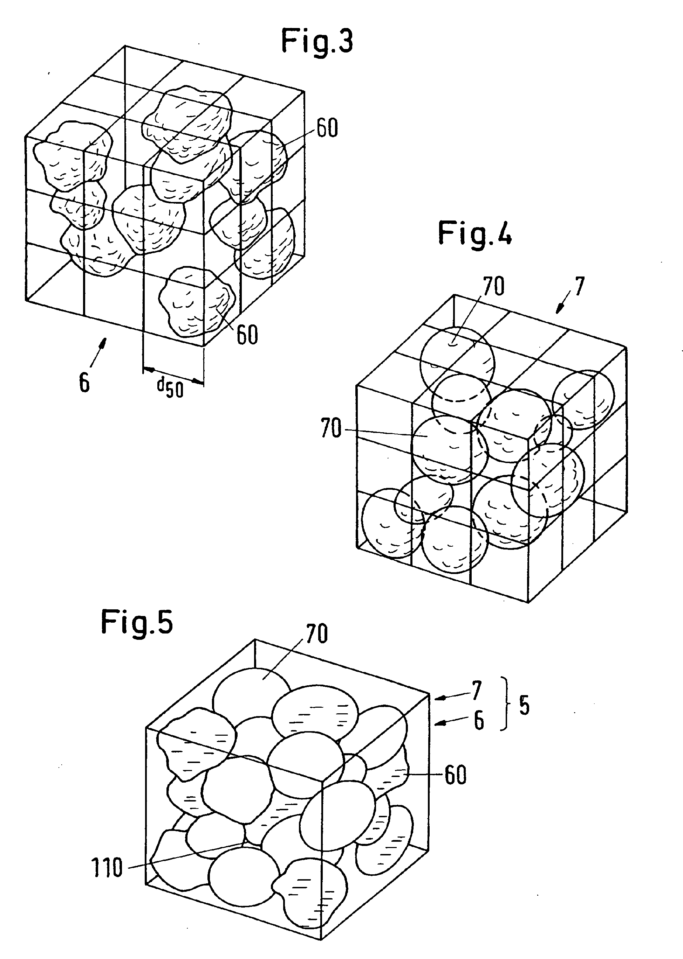

Die erfindungsgemässe Anodenstruktur 1 weist eine durch die Makroporen 100 und ein Elektrodenmaterial 5 gebildete Struktur auf. Die Makroporen 100 bilden kommunizierende Räume, die mittels Porenbildnern erzeugt sind. Das Elektrodenmaterial 5 - siehe die Figuren 3 bis 5 - umfasst skelett- oder netzartige, zusammenhängende Gefüge aus durch Sintern verbundenen Partikeln 60 und 70. Diese Partikel 60, 70 bilden zwei ineinander verschränkte Retikularsysteme 6 und 7 (Fig. 5), nämlich ein erstes Retikularsystem 6 (Fig.3) aus keramischem Material und ein zweites Retikularsystem 7 (Fig. 4), das Metalle zur Bewirkung einer elektrischen Leitfähigkeit enthält. Das Elektrodenmaterial 5 hat erfindungsgemäss die Eigenschaften, dass bei mehrfachem Wechsel zwischen oxidierenden und reduzierenden Bedingungen (Redox-Wechsel) folgendes gilt: Einerseits treten im keramischen Retikularsystem 6 keine chemischen und strukturellen Änderungen auf. Andererseits ergibt sich im zweiten Retikularsystem aufgrund des Redox-Wechsels eine Oxidation bzw. Reduktion der in den Partikeln 70 enthaltenen Metalle, wodurch sich eine Alterung ergibt. Die beiden Retikularsysteme 6, 7 bilden zusammen ein dichtes Gefüge, das im oxidierten Zustand Mikroporen 110 enthält, deren Volumenanteil bezogen auf das Elektrodenmaterial 5 kleiner als 20% ist. Vorzugsweise ist dieser Volumenanteil kleiner als 10% oder noch besser 5%. Bei der Reduktion der Metalle verringern sich im zweiten Retikularsystem 7 die Abmessungen der Partikel 70; es entstehen daher weitere, nicht dargestellte Mikroporen. Bei einer erneuten Oxidation der Metalle verschwinden diese weiteren Mikroporen, die mit "Typ II - Mikroporen" bezeichnet sein sollen. Die Mikroporen 110 der oxidierten Anodenstruktur 1 sind "Typ I - Mikroporen". Die "Typ II - Mikroporen" haben einen kleineren Einfluss auf die strukturelle Stabilität des Elektrodenmaterials 5 als die "Typ I - Mikroporen".

Wie empirisch festgestellt werden konnte, ergeben sich Retikularsysteme, wenn die Partikel 60, 70 Durchmesser haben, deren mittlerer Wert d₅₀ vor dem Sintern kleiner als 1 µm ist (d₅₀: 50 Vol% der Partikel haben einen Durchmesser kleiner als d₅₀). Es ergeben sich dabei Mikroporen, deren Durchmesser kleiner als 3 µm sind. Die Redox-Stabilität wird für kleinere Durchmesser noch besser. Vorzugsweise wird eine Anodenstruktur so hergestellt, dass Mikroporen mit Durchmessern kleiner als 1 µm entstehen. Der Volumenanteil des keramischen Retikularsystems - bezogen auf das Elektrodenmaterial - soll mindestens 30% betragen. Damit die Alterung nicht zu schnell zu einem nicht tolerierbaren Verlust bei der elektrischen Leitfähigkeit führt, soll der Volumenanteil des zweiten Retikularsystems grösser als jener des keramischen Retikularsystems sein, beispielsweise um mindestens einen Faktor 1.5 grösser.

Zur Bildung der Retikularsysteme müssen die Partikel in eine ausreichend feine Form gebracht werden. Dies kann beispielsweise durch Mahlen eines grobkörnigen Pulvers geschehen. Gröbere Partikel können - wenn nötigdurch Klassieren (z. B. durch Sieben) aus dem Mahlgut entfernt werden. Die notwendige Pulverqualität erhält man beispielsweise durch Aufarbeiten des Pulvers mittels Sprühtrocknen. Geeignete feindisperse Partikel können auch mit Verfahren der Nanotechnologie präpariert werden: beispielsweise mittels Reaktionssprühverfahren, Spray-Flammen-Pyrolyse, Ausscheidungsverfahren oder Sol-Gel-Verfahren.

Ist als Material für den Elektrolyten Zirkoniumoxid, YSZ, vorgesehen, so nimmt man mit Vorteil auch für die Anodenstruktur, d.h. für deren erstes Retikularsystem, das gleiche keramische Material. Für das zweite Retikularsystem werden vorzugsweise Nickeloxid-Partikel verwendet, die bis zu 10 Gew.% andere Stoffe als Nickeloxid enthalten. Solche Nickeloxid-Partikel, die auf dem Markt als Farbstoffkomponenten angeboten werden, stehen als kostengünstiger Rohstoff zur Verfügung. Diese Farbstoff-Partikel enthalten vorteilhafterweise auch Stoffe, die beim Sintern der Anodenstruktur als Sinterhilfen wirken.

Bei der Herstellung der erfindungsgemässen Anodenstruktur ist es von Vorteil, wenn im zweiten Retikularsystem Additive von mindestens einer Art enthalten sind. Solche Additive können beim Sintern als Sinterhilfe dienen. Weitere Additive können während des Betriebs der Brennstoffzellen als Inhibitoren ein schädliches Kornwachstum behindern. Als Sinterhilfen können Oxide oder Salze von Ni, Mn, Fe, Co und/oder Cu und als Inhibitor des Kornwachstums MgO verwendet werden.

Die erfindungsgemässe Anodenstruktur muss kommunizierende Räume aufweisen, die für den gasförmigen Brennstoff eine Durchlässigkeit ermöglichen, die bezüglich den stromliefernden Elektrodenreaktionen ausreichend ist. Diese Gasdurchlässigkeit wird mit Makroporen herbeigeführt, deren Durchmesser im Bereich zwischen 3 und 20 µm liegen. Die Makroporen lassen sich mit Porenbildnern herstellen. Dazu werden Partikel oder Fasern aus einem organischen Material, insbesondere Cellulose, verwendet. Dieses organische Material wird bei einem Sintern, das bei oxidierenden Bedingungen durchgeführt wird, zersetzt; die Zersetzungsprodukte verflüchtigen sich.

Bei einem geeigneten Verfahren zur Herstellung der erfindungsgemässen Anodenstruktur wird wie folgt vorgegangen: Partikel aus keramischem Material (z. B. YSZ) und aus einem Metalloxid (z. B. grüne oder braune Nickeloxid-Partikel) werden durch Mahlen und Klassieren in eine zur Bildung der Retikularsysteme ausreichend feine Form gebracht. Aus den Partikeln, Porenbildnern und einer Flüssigkeit wird eine homogene Mischung in Form eines Schlickers gebildet. Der Schlicker wird zu einer Schicht gegossen. Wird der Schlicker in eine saugfähige Form gegossen, so wird ihm ein Teil der Flüssigkeit entzogen. Gleichzeitig entsteht eine Randzone, in dem ein Manko an Porenbildnern besteht. Es ergibt sich so eine inhomogene Struktur, wie sie in Fig. 2 dargestellt ist.

Nach einem vollständigen Entfernen der Flüssigkeit aus der Schlickerschicht durch Trocknen wird gesintert, wobei das Sintern vorzugsweise zusammen mit einer auf der Schicht aufgebrachten Festelektrolytschicht durchgeführt wird. Es gibt eine optimale Sintertemperatur, bei der einerseits eine Struktur mit kleinen Mikroporen entsteht und andererseits eine ungünstige Beeinflussung der Retikularstruktur minimal bleibt. Je grösser die Sintertemperatur ist, desto kleiner ist die Dichte der Mikroporen, aber desto stärker wird die Retikularstruktur beeinträchtigt.

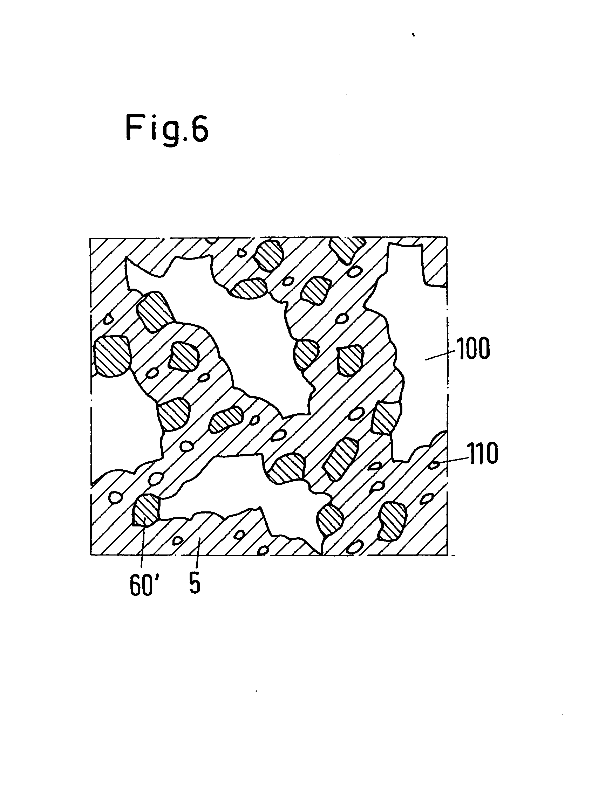

Fig. 6 zeigt eine Anodenstruktur, in deren Elektrodenmaterial 5 grössere Partikel 60' aus keramischem Material eingelagert sind. Die groben Partikel 60' sind inselartig in eine Matrix der feinen Partikel 60, 70 (siehe Fig. 5) eingelagert. Mit den groben Partikeln 60', deren Durchmesser im Bereich zwischen rund 2 und 10 µm liegen, lassen sich die Herstellkosten verkleinem; denn es muss weniger Material in die benötigt feine Form gebracht werden. Durch zugemengte grobe Partikel kann auch eine grössere Festigkeit des keramischen Retikularsystems gewonnen werden, wenn sich durch die groben Partikel ein geringerer Volumenanteil der Mikroporen ergibt.

Die erfindungsgemässe Anodenstruktur ist flächig ausgebildet, beispielsweise platten- oder schalenförmig. Plattenförmig weist sie in zwei räumlichen Dimensionen eine grosse Ausdehnung auf; in einer dritten Dimension hat sie eine Dicke von relativ kleiner Ausdehnung, die jedoch grösser als 0.5 mm ist. Mit dieser Dicke erreicht man die benötigte Tragkraft der Anodenstruktur.

Das keramische Retikularsystem (6) kann ausser aus dem stabilisierten Zirkoniumoxid, YSZ, auch aus Aluminiumoxid, Al₂O₃, aus Titanoxid, TiO₂, aus gedoptem Ceroxid, CeO₂, aus Magnesiumoxid, MgO, und/oder aus einer Spinel-Verbindung bestehen. Für das CeO₂ können als Dopingmittel Oxide der Stoffe Y, Ti, Gd und/oder Co verwendet werden.

Gegenüber der in der DE-A- 19 819 453 beschriebenen Hochtemperatur-Brennstoffzelle kann beim erfindungsgemässen Herstellverfahren eine dem Anodensubstrat und der Anodenzwischenschicht entsprechende Anodenstruktur in gemeinsamen Arbeitsschritten hergestellt werden. Dies ist offensichtlich eine Vereinfachung des Verfahrens, die sich auf die Herstellkosten positiv auswirkt.

Zur Herstellung der erfindungsgemässen Anodenstruktur können auch weitere, an sich bekannte Verfahren angewendet werden: Foliengiessen, Rollpressen, Nasspressen oder isostatisches Pressen.

## Patentansprüche

1. Strukturierter Körper für eine in Brennstoffzellen verwendete Anode (1), mit einer Struktur, die durch Makroporen (100) und durch ein Mikroporen (101) enthaltendes Elektrodenmaterial (5) gebildet ist, wobei
a) die Makroporen kommunizierende Räume bilden, die mittels Porenbildner erzeugt sind,
b) das Elektrodenmaterial skelett- oder netzartige, zusammenhängende Gefüge aus durch Sintern verbundenen Partikeln (60, 70) umfasst, die zwei ineinander verschränkte Retikularsysteme (6, 7) bilden, nämlich ein erstes Retikularsystem (6) aus keramischem Material und ein zweites Retikularsystem (7), das Metalle zur Bewirkung einer elektrischen Leitfähigkeit enthält,
c) das Elektrodenmaterial die Eigenschaften hat,
c1) dass die Metalle bei Betriebstemperaturen der Brennstoffzellen und bei Anwesenheit von Sauerstoff oder von für den Betrieb verwendeten Brennstoff oxidiert bzw. reduziert werden,
c2) dass bei mehrfachem Wechsel zwischen oxidierenden und reduzierenden Bedingungen einerseits im keramischen Retikularsystem keine wesentlichen Eigenschaftsänderungen auftreten und andererseits im zweiten Retikularsystem sich eine Oxidation bzw. Reduktion der Metalle ergibt, und
c3) dass die beiden Retikularsysteme zusammen aufgrund einer ausreichend feinen Form der durch Mahlen und Klassieren präparierten Partikel (60, 70) ein dichtes Gefüge bilden, das im oxidierten Zustand Mikroporen (110) enthält, deren Durchmesser kleiner als 3 µm sind und deren Volumenanteil bezogen auf das Elektrodenmaterial kleiner als 20%, vorzugsweise kleiner als 5% ist.

2. Strukturierter Körper nach Anspruch 1 **dadurch gekennzeichnet, dass** das keramische Retikularsystem (6) relativ grobe Partikel (60') mit Durchmessern zwischen 2 und 10 µm enthalten kann, dass die weiteren Partikel (60, 70) im ungesinterten Zustand Durchmesser haben, deren mittlerer Wert d₅₀ kleiner als 1 µm ist, dass die Mikroporen (110) Durchmesser kleiner als 1 µm haben und dass der Volumenanteil des keramischen Retikularsystems (6) bezogen auf das Elektrodenmaterial mindestens 30% beträgt.

3. Strukturierter Körper nach Anspruch 1 oder 2, **dadurch gekennzeichnet, dass** das keramische Retikularsystem (6) aus mit Yttrium stabilisiertem Zirkoniumoxid, YSZ, aus Aluminiumoxid, Al₂O₃, aus Titanoxid, TiO₂, aus gedoptem Ceroxid, CeO₂, aus Magnesiumoxid, MgO, und/oder aus einer Spinel-Verbindung besteht, und dass insbesondere für das Elektrodenmaterial (5) Partikel (60, 70) verwendet sind, die für das erste Retikularsystem (6) aus stabilisiertem Zirkoniumoxid, YSZ, bestehen bzw. die für das zweite Retikularsystem (7) mindestens 90 Gew.% Nickeloxid enthalten.

4. Strukturierter Körper nach einem der Ansprüche 1 bis 3, **dadurch gekennzeichnet, dass** die Makroporen (100) Durchmesser im Bereich von 3 bis 20 µm aufweisen.

5. Strukturierter Körper nach einem der Ansprüche 1 bis 4, **dadurch gekennzeichnet, dass** als Porenbildner für die Makroporen Partikel oder Fasern aus einem organischen Material, insbesondere Cellulose, verwendet sind, die sich beim Sintern bei oxidierenden Bedingungen verflüchtigen.

6. Strukturierter Körper nach einem der Ansprüche 1 bis 5, **dadurch gekennzeichnet, dass** im zweiten Retikularsystem (7) Additive von mindestens einer Art enthalten sind, wobei die erste oder einzige Art beim Sintern als Sinterhilfen dient und eine zweite Art während des Betriebs der Brennstoffzellen als Inhibitor des Kornwachstums wirkt.

7. Strukturierter Körper nach Anspruch 6, **dadurch gekennzeichnet, dass** als Sinterhilfen Oxide oder Salze von Ni, Mn, Fe, Co und/oder Cu verwendet sind und/oder als Inhibitor des Kornwachstums MgO verwendet ist.

8. Strukturierter Körper nach Anspruch 6, **dadurch gekennzeichnet, dass** er platten- oder schalenförmig ausgebildet ist und eine Platten- oder Schalendicke aufweist, die grösser als 0.5 mm ist.

9. Hochtemperatur-Brennstoffzelle mit einem strukturierten Körper gemäss einem der Ansprüche 1 bis 8, **dadurch gekennzeichnet, dass** das Elektrodenmaterial (5) bei einer Betriebstemperatur von bis zu 1000°C verwendbar ist, dass die Anode (1) eine Trägerstruktur (10, 11) für eine dünne Festelektroytschicht (3) und eine Katode (2) bildet und dass die kommunizierenden Räume der Anode eine bezüglich stromliefernden Elektrodenreaktionen ausreichende Durchlässigkeit für einen gasförmigen Brennstoff ermöglichen und zwar bis zu einer Grenzzone (11) unter der Elektrolytschicht, in der eine weitere Gasdurchlässigkeit durch die Mikroporen (110) des Elektrodenmaterials gegeben ist.

10. Verfahren zur Herstellung eines strukturierten Körpers gemäss einem der Ansprüche 1 bis 8, **dadurch gekennzeichnet, dass** die Partikel (60, 70) durch Mahlen und Klassieren in eine zur Bildung der Retikularsysteme (6, 7) ausreichend feine Form gebracht werden, aus den Partikeln mit Porenbildnern und einer Flüssigkeit eine homogene Mischung in Form eines Schlickers gebildet wird, der Schlicker zu einer Schicht gegossen wird und die Schicht nach einem Entfernen der Flüssigkeit gesintert wird, wobei das Sintern vorzugsweise zusammen mit einer auf der Schicht aufgebrachten Festelektrolytschicht durchgeführt wird.

## Claims

1. A structured body for an anode (1) used in fuel cells, having a structure formed by macropores (100) and by an electrode material (5) including micropores wherein:
a) the macropores form communicating spaces which are produced by means of pore forming materials
b) the electrode material includes skeleton-like or net-like connected structures of particles (60, 70) which are connected by sintering and which form two reticular systems (6, 7) which interengage, namely a first reticular system (6) made of ceramic material and a second reticular system (7) which contains metals to bring about an electrical conductivity
c) the electrode material has the properties that
c1) at operating temperatures of the fuel cells and in the presence of oxygen or fuel used for the operation the metals respectively oxidise or are reduced
c2) with a multiple change between oxidising and reducing conditions, substantially no major property changes occur in the ceramic reticular system, on the one hand, and an oxidisation or reduction of the metals results in the second reticular system, on the other hand, and
c3) the two reticular systems together form a compact structure as a result of an adequately fine form of the particles (60, 70) prepared by grinding and classification which contains micropores (110) in the oxidised state whose diameters are smaller than 3 µm and whose proportion by volume is less than 20%, preferably less than 5%, with respect to the electrode material.

2. A structured body in accordance with claim 1, **characterised in that** the ceramic reticular system (6) can include relatively coarse particles (60') with diameters between 2 and 10 µm; **in that** the further particles (60, 70) have diameters in the unsintered state whose mean value d₅₀ is smaller than 1 µm; **in that** the micropores (110) have diameters smaller than 1 µm; and **in that** the proportion by volume of the ceramic reticular system (6) with respect to the electrode material amounts to at least 30%.

3. A structured body in accordance with claim 1 or claim 2, **characterised in that** the ceramic reticular system (6) includes zirconium oxide stabilised with yttrium, YSZ, aluminium oxide, Al₂O₃, titanium oxide, TiO₂, doped cerium oxide, CeO₂, magnesium oxide, MgO, and/or a spinel compound; and **in that** particles (60, 70) are used, in particular for the electrode material (5), which consist of stabilised zirconium oxide, YSZ, for the first reticular system or which include at least 90% by weight of nickel oxide for the second reticular system.

4. A structured body in accordance with any one of claims 1 to 3, **characterised in that** the macropores (100) have diameters in the range from 3 to 20 µm.

5. A structured body in accordance with any one of claims 1 to 4, **characterised in that** particles or fibres of an organic material, in particular cellulose, are used as pore forming materials for the particles and evaporate on sintering with oxidising conditions.

6. A structured body in accordance with any of claims 1 to 5, **characterised in that** additives of at least one kind are included in the second reticular system (7), with the first or only kind serving as sintering aids in sintering and a second kind acting as an inhibitor to grain growth during the operation of the fuel cells.

7. A structured body in accordance with claim 6, **characterised in that** oxides or salts of Ni, Mn, Fe, Co and/or Cu are used as sintering aids and/or MgO is used as the inhibitor of grain growth.

8. A structured body in accordance with claim 6, **characterised in that** it is made in plate-like or shell-like form and has a plate thickness or shell thickness which is larger than 0.5 mm.

9. A high temperature fuel cell having a structured body in accordance with any one of claims 1 to 8, **characterised in that** the electrode material (5) can be used at an operating temperature of up to 1000°C; **in that** the anode (1) forms a support structure (10, 11) for a thin solid electrolyte layer (3) and a cathode (2); and **in that** the communicating spaces of the anode enable a permeability for a gaseous fuel which is sufficient with respect to current supplying electrode reactions, and indeed up to a boundary zone (11) under the electrolyte layer in which a further gas permeability is given by the micropores (110) of the electrode material.

10. A method of manufacturing a structured body in accordance with any one of claims 1 to 8, **characterised in that** the particles (60, 70) are brought into a sufficiently fine form for the formation of the reticular systems (6, 7) by grinding and classification, a homogeneous mixture in the form of a slurry is formed from the particles with pore forming materials and a liquid, the slurry is poured to form a layer and the layer is sintered after removal of the liquid, with the sintering preferably being carried out together with a solid electrolyte layer applied to the layer.

## Revendications

1. Corps structuré pour une anode (1) utilisée dans des cellules de combustibles, comprenant une structure, qui est formée par des macropores (100) et par un matériau d'électrode (5) contenant des micropores (101),
a) les macropores formant des espaces communicants qui sont générés au moyen d'agent porogène,
b) le matériau d'électrode comprenant des structures cohérentes, de type ossature ou réseau, à base de particules (60, 70) reliées par frittage, qui forment deux systèmes réticulaires (6, 7) imbriqués l'un dans l'autre, à savoir un premier système réticulaire (6) à base de matériau céramique et un second système réticulaire (7), qui contient des métaux pour l'obtention d'une conductibilité électrique,
c) le matériau d'électrode ayant les propriétés suivantes de sorte que
c1) les métaux sont oxydés et réduits à des températures de service des cellules de combustible et en présence d'oxygène ou de combustible utilisé pour le service,
c2) en cas de changement multiple entre des conditions oxydantes et des conditions réductrices, il n'apparaît pas de modifications de propriété importantes dans le système réticulaire céramique et d'autre part, on obtient une oxydation ou une réduction des métaux dans le second système réticulaire, et
c3) les deux systèmes réticulaires forment ensemble, sur la base d'une forme suffisamment fine des particules (60,70) préparées par broyage et tri, une structure dense qui contient dans l'état oxydé des micropores (110) dont le diamètre est inférieur à 3 µm et dont la fraction de volume par rapport au matériau d'électrode est inférieure à 20%, de préférence inférieure à 5%.

2. Corps structuré selon la revendication 1,
**caractérisé en ce que** le système réticulaire (6) céramique peut contenir des particules (60') relativement grosses avec des diamètres compris entre 2 et 10 µm, **en ce que** les autres particules (60, 70) ont dans l'état non fritté des diamètres dont la valeur moyenne d₅₀ est inférieure à 1 µm, **en ce que** les micropores (110) ont des diamètres inférieurs à 1 µm et **en ce que** la fraction de volume du système réticulaire (6) céramique par rapport au matériau d'électrode est d'au moins 30%.

3. Corps structuré selon la revendication 1 ou 2, **caractérisé en ce que** le système réticulaire (6) céramique est constitué d'oxyde de zirconium (YSZ) stabilisé avec de l'yttrium, d'oxyde d'aluminium (Al₂O₃), d'oxyde de titane (TiO₂), d'oxyde de cérium (CeO₂) dopé, d'oxyde de magnésium (MgO), et/ou d'un composé de spinelle, et **en ce que**, en particulier pour le matériau d'électrodes (5), on utilise des particules (60, 70) qui sont à base d'oxyde de zirconium (YSZ) stabilisé ou qui contiennent pour le second système réticulaire (7) au moins 90% en poids d'oxyde de nickel.

4. Corps structuré selon l'une quelconque des revendications 1 à 3, **caractérisé en ce que** les macropores (100) présentent des diamètres situés dans la plage de 3 à 20 µm .

5. Corps structuré selon l'une quelconque des revendications 1 à 4, **caractérisé en ce que**, comme agents porogènes pour les macropores, on utilise des particules ou des fibres à base d'un matériau organique, en particulier de la cellulose, qui se volatilisent lors du frittage dans des conditions oxydantes.

6. Corps structuré selon l'une quelconque des revendications 1 à 5, **caractérisé en ce que** des additifs d'au moins un type sont inclus dans le second système réticulaire (7), le premier ou unique type servant d'aides au frittage et un second type agissant pendant l'exploitation des cellules de combustible comme inhibiteur de la croissance de grain.

7. Corps structuré selon la revendication 6,
**caractérisé en ce que**, comme aides au frittage, on utilise des oxydes ou des sels de Ni, Mn, Fe, Co et/ou Cu et/ou du MgO est utilisé comme inhibiteur de la croissance de grain.

8. Corps structuré selon la revendication 6,
**caractérisé en ce qu'**il est conçu sous la forme de plaque ou de coque et présente une épaisseur de plaque ou de coque qui est supérieure à 0,5 mm.

9. Cellule de combustible à haute température comprenant un corps structuré selon l'une quelconque des revendications 1 à 8, **caractérisé en ce que** le matériau d'électrode (5) peut être utilisé à une température de service allant jusqu'à 1.000°C, **en ce que** l'anode (1) forme une structure porteuse (10, 11) pour une mince couche d'électrolyte solide (3) et une cathode (2) et **en ce que** les espaces communicants de l'anode permettent une perméabilité suffisante en ce qui concerne des réactions d'électrodes fournissant du courant pour un combustible gazeux et ce jusqu'à une zone limite (11) au-dessous de la couche d'électrolyte dans laquelle on a une autre perméabilité au gaz à travers les micropores (110) du matériau d'électrode.

10. Procédé pour la fabrication d'un corps structuré selon l'une quelconque des revendications 1 à 8,
**caractérisé en ce que** les particules (60, 70) sont amenées par broyage et triage dans une forme suffisamment fine pour la formation des systèmes réticulaires (6, 7), un mélange homogène sous la forme d'une barbotine est formé à partir des particules avec des agents porogènes, la barbotine est coulée pour former une couche et la couche est frittée après un enlèvement du liquide, le frittage étant effectué de préférence conjointement avec une couche d'électrolyte solide appliquée sur la couche.
